# EUROPEAN PATENT APPLICATION

(11) **EP 3 263 789 A1**
(43) Date of publication of application: **03.01.2018**
(21) Application number: 17177615.6
(22) Date of filing: 23.06.2017
(51) Int. Cl.: E04B 1/343, F24F 3/16

(54) **PREFABRICATED MONOLITHIC MODULAR CLEAN ROOM SYSTEM**

(30) Priority: 27.06.2016 IT UA20164690
(71) Applicant: SINTECO IMPIANTI S.R.L., 20099 Sesto San Giovanni, Milano (IT)
(72) Inventor: Marinoni, Attilio, 20099 Sesto San Giovanni (IT)
(74) Representative: Rastelli, Franco

(57) **Abstract**

A prefabricated monolithic modular self-supporting sanitizable clean room system comprises at least one clean room having large monolithic panels, consisting of a high density foamed polystyrene inner core, and coated in fiberglass/polyester, the system having the following particular characteristics: high productivity with increase in product shelf life, absolute air filtering, temperature, humidity and overpressure control, reduced washing and drying times, maximum washability, high efficiency air treatment mixer system with desiccant dehumidification wheel, significant reduction in costs of civil works and also including all the prefabricated utilities.

## Description

The present invention concerns a prefabricated monolithic modular clean room system, designed in particular for the food industry, and also for the pharmaceutical, hospital and veterinary sectors.

As is known, in particular in the area of food safety, various guidelines require producers to preserve product quality by control of ambient air quality and management of temperature and relative humidity levels, and of the pressure difference between the rooms in which the various work processes are carried out.

For said purpose, so-called clean rooms are used, in which temperature, humidity and concentration of air-transported particles, in particular organic particles (spores, yeasts, moulds, bacteria etc.), are controlled.

One of the main issues for all food and non-food companies is to prevent the sources of pollution present in the production departments having a negative effect on the quality of the end product.

The purpose of the present invention is to study and define the project for an entire clean room system and to be able to prefabricate and test it entirely at the factory, significantly reducing the traditionally long design and construction times for the associated civil works and relative costs.

Clean rooms prefabricated with innovative, modular, integrated, ultra-compact and high quality construction techniques.

Complete clean room equipped with all utilities preassembled for rapid turnkey production.

The reduction in on-site installation times allows quicker start-up of the rooms and therefore an increase in productivity.

In the context of this purpose, one object of the invention is to produce a system in which all the details and accessories have been previously studied so as to reduce all site contingencies. The system is designed in particular to obtain a product with a high level of hygiene.

A further object is to produce a system comprising clean rooms with a high level of hygiene and with extremely functional and simple construction.

A further object of the present invention is to produce a system with greatly reduced installation times, since almost all the system is factory tested and preassembled.

A further object is to produce a monolithic, modular, self-supporting and anti-seismic system which allows the design-prefabrication-construction of small and large-size systems to house entire lines, also having very high productivity.

A further object is to be able to guarantee perfect control of the temperature, humidity and overpressure, with absolute filtering of the air, and to minimize washing and drying times.

These and further objects, which will become apparent below are achieved by a modular clean room system characterized in that it comprises at least one clean room consisting of special monolithic panels, formed by an inner high density polystyrene core, and coated in fiberglass/polyester of appropriate thickness.

The panels comprise flush openings/visual ports, horizontally and vertically extending, doors, ceiling openings and integrated lighting system.

The clean room further comprises inner and outer perimeter shells made of stainless steel, with high thickness and strength, and having a hygienic profile.

Further characteristics and advantages of the present invention will be explained in detail through the examination of the description of a preferred but not exclusive embodiment of the invention, illustrated by way of non-limitative example in the accompanying drawings, in which:

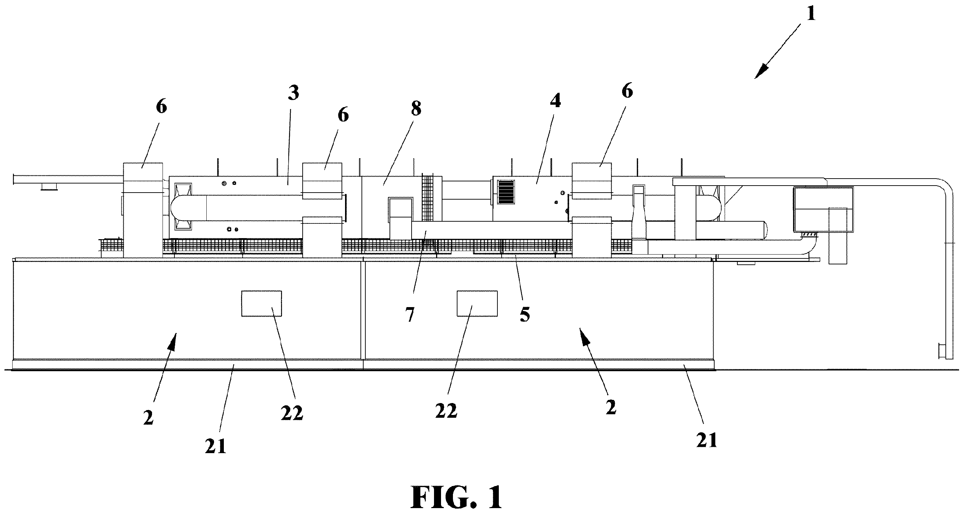

figure 1 is a lateral elevation view illustrating a modular clean room system, designed in particular for the food industry, according to the present invention;
figure 2 is a plan view of the system of the preceding figure;

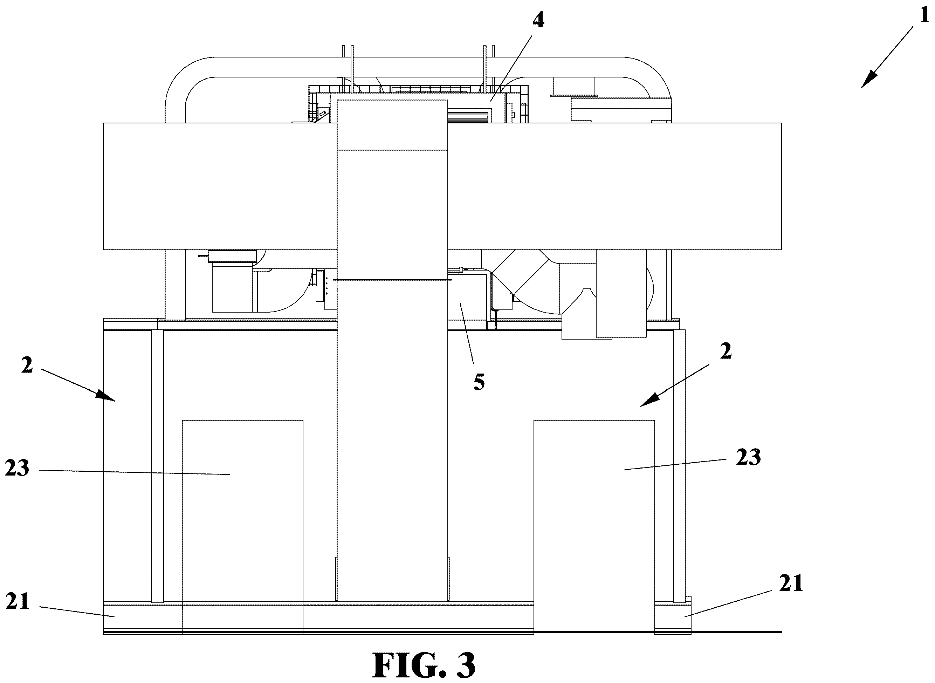

figure 3 is a front view of the system;

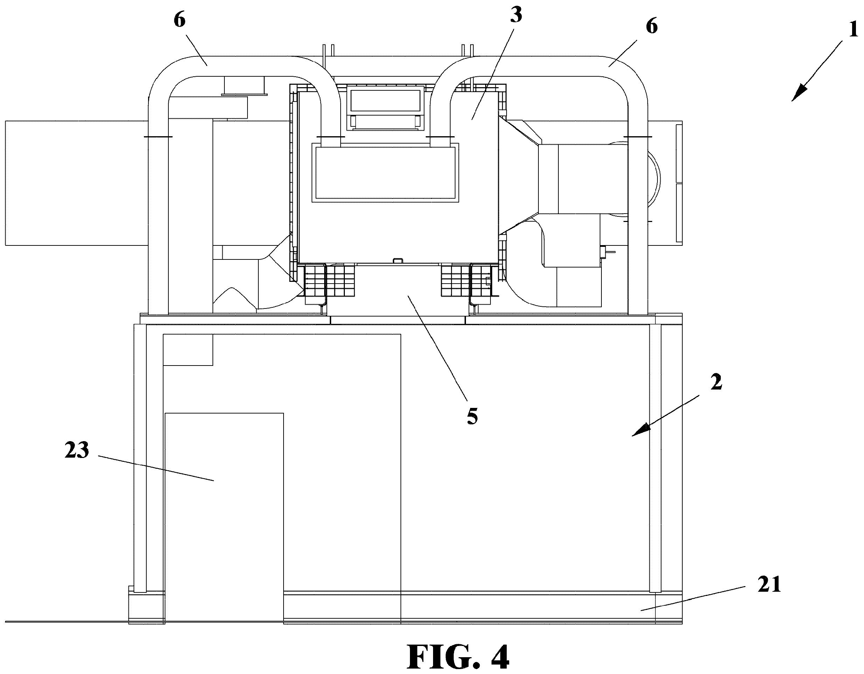

figure 4 is a rear view of the system.

With particular reference to the numerical symbols of the above-mentioned figures, the modular clean room system, according to the invention, indicated as a whole by the reference number 1, comprises a containment structure 2 built in special insulated fiberglass/polyester monolithic panels, ultra-thick and above all of large-size, chosen on the basis of the temperatures and the application, complete with shells 21 made of sanitizable stainless steel, visual ports 22, doors 23, etc.

The system further comprises two hygienic completely sanitizable air treatment units 3 and 4, for example Sinteco Hygiene^{®} type, produced completely in welded stainless steel or fiberglass/polyester and internally washable.

The units can advantageously be of the "Hygiene®" type, made by the company Sinteco.

The system can also be produced with one air treatment unit; in this case the system adjustment flexibility is lower.

The units comprise plug fans with directly coupled motor, inox/Al or Cu/Al batteries with pitch suited to the temperatures and to the washing. One of the units is provided with a special custom made silica gel dehumidification wheel.

The system further comprises a protective Nembotex^{®} modular plenum 5 for laminar flow, in stainless steel AISI 304L, very robust, inspectable and washable, designed in order to contain both the housing and support for laminar flow sheets and/or HEPA high efficiency absolute filters, in particular to obtain class ISO 5 or lower, considered in conditions at rest.

The system further comprises air distribution and recovery ducts 6, made of welded flanged stainless steel, specially shaped to allow high washability, complete with inspection doors and suitable for washing and sanitization.

The system has been studied to minimize air pressure losses.

The system further comprises air conveying ducts 7 made of special technical fabrics, and diffusion ducts made of textile fiber which allow, by simple disassembly and reassembly operations, easy periodic washing with subsequent sterilization treatment if necessary.

The system is completed by an external air treatment unit and an extractor, both internally washable and sanitizable, and by electrical control panels and adjustment systems, etc.

By way of example, the system described and illustrated here refers to a slicing and packaging clean room having the following nominal operating characteristics: class ISO 5, according to ISO 14644-1:2015.

Each clean room comprises large-size monolithic panels (in order to eliminate the joints), consisting of a high density polystyrene inner core and coated in fiberglass/polyester (total panel thickness 60 to 150 mm.). The panels that compose the clean room modules are custom-made for each project.

The panels are complete with: special flush visual ports horizontally/vertically extending 22, doors 23 in suitable plastic material, also insulated, having visual ports, also flush, door in panel for line introduction and ceiling visual ports 24 for insertion of integrated lighting.

The clean room comprises inner and outer perimeter shells 21, made of stainless steel AISI 304L, with high thickness and strength and with special hygiene profile.

The shells 21 comprise linear elements, 90° angle elements, door supporting frames and shell lateral closing plugs.

The system 1 comprises two air treatment units 3 and 4, of the type manufactured by the Applicant, model Sinteco Hygiene^{®}, completely in welded stainless steel or in fiberglass/polyester.

The first air treatment unit 3 comprises pre-filters and filters G4+F7, stainless steel/Al or Cu/Al cold and hot battery, motor + plug fan and absolute final filtering.

The second unit 4, with chemical dehumidification wheel, comprises pre-filters and filters G4+F7, motor + plug fan, stainless steel/Al or Cu/Al cold battery and absolute final filtering.

The regeneration section of the unit 4 comprises pre-filters and filters G4+F7 (high temperature), stainless steel/Al hot battery, motor + special fan for this application.

The Nembotex^{®} air distribution plenum 5 is made entirely of welded stainless steel specially shaped for clean rooms. The plenum is insulated with high density polyurethane applied using a particular spray technique which ensures perfect adhesion and long life of the insulation in addition to high thickness.

Two plenums are scheduled, one for the clean room itself and the other for the depackaging zone.

The plenum 5 for the clean room has a variable width depending on the line, for example from 600 to 1200 mm, variable length depending on the line and customized height.

The plenum inside the depackaging room has a variable width depending on the line, from 600 to 1200 mm, variable length and customized height.

The plenums 5 can be modular in different sections depending on the length of the room.

The system further comprises metal channels installed for recovery of the ambient air, expulsion of the washing air and regeneration.

The Aermet sanitizable ambient air recovery channels are made of welded/flanged stainless steel AISI 304L with thickness suitable for the intended use, insulated with foamed polyurethane (variable thickness, high density) with special application by spray technique, complete with inspection ports for checking and washing.

The channels comprise ambient air recovery descending elements made of welded/flanged stainless steel and specially shaped, complete with suction grids, positioned inside the clean room designed to ensure maximum inspectability and washability without affecting performance.

A manifold is also provided for expulsion of the evening washing air, made of welded/flanged stainless steel AISI 304L of suitable thickness, insulated with high density foamed polyurethane, applied by spray technique, complete with stacks and inspection ports for checking and washing.

The manifold is sized considering simultaneous washing of a certain number of clean rooms and has a flanged terminal for connection to it in the event of future expansion.

The channels further comprise gate valves complete with servo control on the washing air expulsion channels.

The system comprises circular section air delivery ducts made of Aertex^{®} textile fiber, with high efficiency insulation, for the depackaging rooms.

The two air treatment units 3 and 4 comprise the respective hot/cold/steam fluid adjustment assemblies. Each adjustment assembly is preassembled and tested.

The system with the air treatment units 3 and 4 is controlled by a stainless steel electrical panel, controlled by PLC logic. The PLC is programmed with our dedicated software according to the different system operating phases, also depending on production requirements.

The system can also be considered completely independent, with supporting grid for the entire system in stainless steel AISI 304L. This structure has been conceived and sized to meet the new anti-seismic legal requirements resulting from the recent reclassifications of areas at risk.

Parts of this system are anchored to the existing structures.

The clean room of the system subject of the present invention is semi-prefabricated and uses monolithic fiberglass panels.

The particular aspect of this technique consists in the fact that the walls are made of sandwich panels in one single large-size piece almost without joints.

This solution solves an age-old construction problem of traditional clean rooms, in which the numerous joints between the panels had to be puttied, with negative results in the long term and with consequently high risks of bacteriological contamination.

The semi-prefabricated clean room subject of the present invention is intended for commercial users who wish to produce large quantities of cured sliced meats or similar products.

The elements that make up this system can be easily transported and can be rapidly assembled in the place of destination due to the limited number of pieces.

The plant comprises a special and advantageous air dehumidification system.

These environments require the use of low temperatures, with low relative humidity during the production phase; the objective is also to minimize the drying times to allow the clean room to return to optimal production conditions as quickly as possible, thus increasing production times.

This system comprises the two air treatment units 3 and 4 connected to each other by means of a plenum mixer 8.

Each unit 3 and 4 is independent but the control system is designed for joint operation of the two units to guarantee high performance and uniformity of the system.

The two air treatment units 3 and 4, by means of the mixer 8, convey the air to the plenum below which ensures perfect uniform distribution of the air throughout the length of the plenum.

The mixer 8 allows mixing and metering of the air, by means of automatic regulation valves, according to the operating conditions.

The entire system comprises various access zones to allow washing and maintenance everywhere.

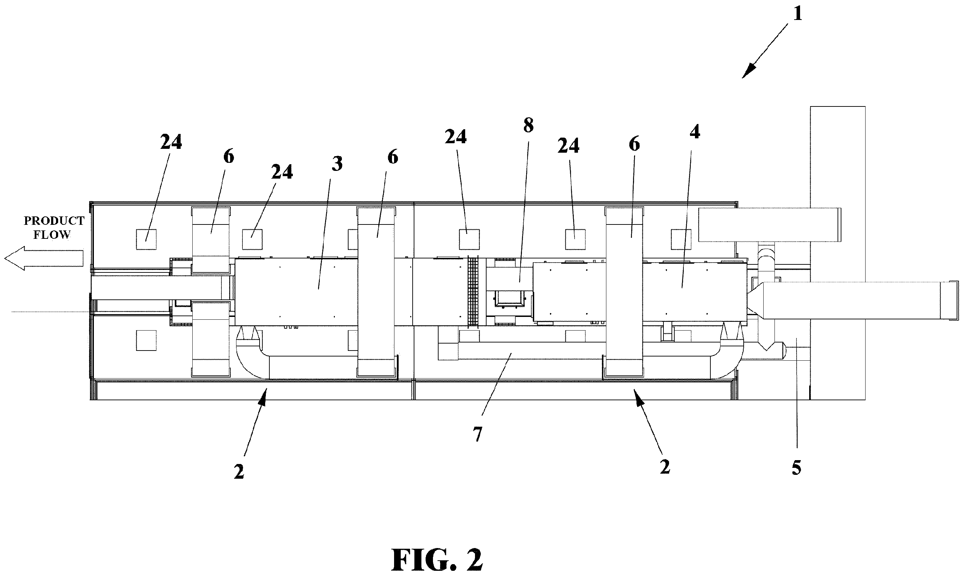

The air in the clean room of figure 2 is recovered laterally by means of descending air recovery elements 6 in stainless steel with special hygienic design, appropriately sized and positioned to ensure a perfect laminar flow on the sensitive zone in the room.

It should also be noted that in the event of stoppage of one of the units due to a technical problem, the system can operate with one unit only, avoiding complete stoppage of the line.

The use of a desiccant dehumidification wheel instead of the traditional mechanical cold system (glycol solution at low temperature below zero) guarantees great advantages both during normal production and in the washing / drying phase.

This solution has been developed, alternative to mechanical cold, i.e. the use of cold glycol at low temperatures, consisting in use of the desiccant dehumidification wheel, able to dry the air without having to use very cold glycol solution.

It should be remembered that the use of very cold glycol produces ice on the thermal exchange batteries, with the need for frequent defrosting to maintain the batteries in efficient working order; during this phase the system must be stopped, otherwise the relative humidity and temperature in the department will be much higher than the permitted level, with negative consequences on the quality of the product.

During normal production, a low temperature and a low relative humidity are required in the production department; to maintain these values the air has to be thoroughly dehumidified.

The production departments considered are washed very frequently, at least once a day, and the washing/drying time is one of the major downtimes in the operation of a clean room, for example for slicing cured meats.

Since the washing duration is fixed, the only intervention to minimize the system downtimes consists in accelerating the drying times of the department (machinery, walls, ceilings, etc.).

Perfect washing is fundamental for the safety of food products, but equally the absence of drops (or in any case condensate that can form on the machinery and on the structures) is fundamental to avoid re-contamination of the rooms and the products.

The drying speed is linked to various factors such as the maximum permitted temperature in the production department, the temperature and humidity of the air introduced, the quantity of air introduced into the department and optimal distribution of the air introduced into the department which allows even the most critical zones to be reached.

The energy saving resulting from the use of warmer glycol is therefore evident, and above all the saving in time which means that production is resumed more quickly and also the risk of bacterial proliferation due to the presence of drops of condensate is reduced.

The clean room subject of the present invention is in high performance class ISO 5 (according to UNI EN ISO 14644-1:2015 and following).

In relation to the processed product, the clean room operates in class ISO 5, with simple adjustments of the air treatment system.

The clean room subject of the present invention can also be used for ambient characteristics in class ISO 6, ISO 7 and ISO 8.

The class will normally be verified at rest, i.e. a finished work environment, ready to be used with the production machines installed and switched on, but without personnel and products in the environment.

In practice the invention has been found to achieve the set purpose and objects.

In fact a system is produced equipped with clean rooms consisting of a rigid stainless steel supporting structure, large-size thermally insulated monolithic panels and hygienic shells supporting the panels on the floor.

The materials used allow maximum washability, long life and maintenance in the long term.

A number of parts of the system are also self-suspended between one another, for example the laminar flow plenum is coupled with the air treatment units, making everything one single compact but highly adjustable block.

All the critical civil construction details are carefully studied to avoid any long-term hygiene risk making the entire building as washable and sanitizable as possible, avoiding standing water, infiltrations and thermal bridges, thus guaranteeing the quality of the environment.

The materials chosen are resistant to numerous and frequent washings over time.

This invention allows the project for an entire building of clean rooms to be studied and defined and allows it to be prefabricated and tested entirely at the factory, minimizing the design, installation and construction times for the civil works.

All the components of this invention can be easily transported.

Furthermore all the details and accessories are studied in the design phase, minimizing all site contingencies and hygiene problems.

The installation times are greatly reduced since almost all the system can be factory tested and preassembled.

This modular system allows small and large-size installations to be designed and constructed (prefabricated) to house entire lines also with very high productivity.

The materials used and the dimensions can be varied according to the needs.

## Claims

1. A prefabricated monolithic modular clean room system, **characterized in that** it comprises at least one clean room (1) having large-size monolithic panels, consisting of a high density foamed polystyrene inner core being coated by fiberglass/polyester material.

2. A system, according to claim 1, **characterized in that** said panels comprise flush openings/visual ports, horizontally/vertically extending (22), doors (23) insulated and non- insulated, with and without flush visual ports, and ceiling openings (24).

3. A system, according to claim 1, **characterized in that** said clean room (1) comprises perimeter inner and outer shells (21), made of stainless steel, having high thickness and strength and a hygienic profile.

4. A system, according to claim 3, **characterized in that** said shells (21) comprise linear elements, 90° angle elements, door supporting frames and shell closing plugs.

5. A system, according to one or more of the preceding claims, **characterized in that** it comprises at least one first air treatment unit (3, 4) including pre-filters and filters G4 + F7, a stainless steel/Al or Cu/Al cold and hot battery, a motor + plug fan assembly and absolute final filtering means.

6. A system, according to claim 5, **characterized in that** it comprises a second air treatment unit (3, 4) including a desiccant dehumidification wheel, pre-filters and filters G4 + F7, motor + plug fan assembly, stainless steel/Al or Cu/Al cold battery and absolute final filtering means.

7. A system, according to one or more of the preceding claims, **characterized in that** it comprises moreover a mixer for mixing and metering the air depending on the operating conditions.

8. A system, according to one or more of the preceding claims, **characterized in that** it comprises at least one air distributing plenum (5) made entirely of a welded stainless steel and specifically contoured for clean rooms.

9. A system, according to one or more of the preceding claims, **characterized in that** it comprises two plenum chambers, one for the clean room and a second plenum for the depackaging zone; said plenum for the clean room having a variable width according to the processing line, a variable length according to the processing line, and a customized height; said plenum in the depackaging zone having a variable width according to the processing line, a variable length and customized height; said plenum chambers being composable in different sections.

10. A system, according to one or more of the preceding claims, **characterized in that** it comprises metal channels installed for recovery of the ambient air, for expulsion of the washing air and regeneration; said ambient air recovery channels are made of welded/flanged AISI 304L stainless steel with thickness adapted to the intended use, insulated with foamed polyurethane (variable thickness, high density) with special application by spray technique, complete with inspection doors for control and washing thereof; said channels comprise ambient air recovery descending made of welded/flanged stainless steel and specifically contoured, complete with suction grids inside the clean room; said system comprises a manifold for expulsion of the evening washing air made of welded/flanged AISI 304L stainless steel of suitable thickness, insulated with high density foamed polyurethane applied by spray technique, complete with stacks and inspection doors for control and washing thereof; said channels further comprise gate valves complete with servo-control on the washing air expulsion channels.

11. A system, according to one or more of the preceding claims, **characterized in that** it further comprises air delivery ducts having circular section made of textile fiber, with high efficiency insulation for the depackaging rooms.

12. A system, according to one or more of the preceding claims, **characterized in that** it comprises a general electrical control panel and adjustment assemblies for connection to the machines.

13. A system, according to one or more of the preceding claims, **characterized in that** it comprises one sanitizable unit for air extraction and one for inlet of external air.
